## Europäisches Patentamt

## European Patent Office

## Office européen des brevets

(19)

(11) Publication number: **0 040 520**
**B2**

(12) NEW EUROPEAN PATENT SPECIFICATION

(45) Date of publication of the new patent specification:
28.02.90

(51) Int. Cl. ⁵: **B 23 P   9/02**

(21) Application number: **81302160.7**

(22) Date of filing: **15.05.81**

(54) Shaping pistons.

(30) Priority: **20.05.80 IT 944080**

(43) Date of publication of application:
**25.11.81 Bulletin 81/47**

(45) Publication of the grant of the patent:
**30.10.85 Bulletin 85/44**

(45) Mention of the opposition decision:
**28.02.90 Bulletin 90/09**

(84) Designated Contracting States:
**AT DE FR GB IT SE**

(56) References cited:
**DE-B-1 171 709
DE-C-750 462
GB-A-292 937
GB-A-501 713
US-A-1 360 558
US-A-1 722 389
US-A-2 387 634
US-A-2 388 363
US-A-2 652 620
US-A-4 189 932
US-E-26 764**

(73) Proprietor: **ASSOCIATED ENGINEERING ITALY S.p.A.
Strada Valdellatore
I-10091 Alpignano Turin (IT)**

(72) Inventor: **Bruni, Ludovico
Via San Marino 11
Turin (IT)**

(74) Representative: **Knott, Stephen Gilbert
MATHISEN, MACARA & CO. The Coach House 6-8
Swakeleys Road
Ickenham Uxbridge Middlesex UB10 8BZ (GB)**

EP 0 040 520 B2

## Description

This invention relates to the shaping of the gudgeon pin bores formed in gudgeon pin bosses of pistons for internal combustion engines or compressors.

In use, the gudgeon pin bosses are subject to high stresses applied by the associated connecting rod through a gudgeon pin held in the bores. These stresses can lead to the appearance of cracks in the gudgeon pin bosses which commonly start at the inner ends of the bores in those areas of the bore-defining walls of the gudgeon pin bosses which lie on the crown side of a plane which includes the common axis of the gudgeon pin bores and which is normal to the piston axis. Such cracks cause the piston to fail and are therefore high undesirable.

Two previous methods of shaping such bosses for reducing the deformation of cracks have been, firstly, cutting away reliefs so that the bore is at least partially non-circular to reduce the stresses and, secondly, roll burnishing the areas to harden the bore-defining walls of the bosses in the burnished areas. Such a method is shown in U.S. Patent Specification No.4 189 932. The former proposal has the disadvantage that a special machining step is required which is expensive both in time and in the cost of equipment necessary to perform the relieving step. The latter proposal has the disadvantage that the burnishing necessarily takes place all round the bore-defining walls of the bosses and that the effect of the operation is proportional to the stiffness of the area being burnished, thus leading to variations in the degree of burnishing around the bores.

A further proposal is the subject of US-A-2 387 634 which discloses a piston in which the gudgeon pin and the gudgeon pin bores are separated by an arcuate wedge-shaped space at the upper inner ends of the gudgeon pin bores. In one embodiment, this is produced by the use of a gudgeon pin whose gudgeon pin bore-contacting portions decrease in diameter inwardly of their ends. In a second embodiment, the space is produced by machining or by heating the piston and then loading the piston to bend the gudgeon pin and stress the upper inner ends of the gudgeon pin bosses beyond their elastic limit, so providing the spaces.

It is a disadvantage of such a piston that stressing the gudgeon pin bosses with the gudgeon pin, not only deforms the upper inner ends of the gudgeon pin bores, but also stresses the lower outer ends of the bores. This can result in the gudgeon pin being only a loose fit in thebores which can increase the noise generated by the pin when in use. In addition, it is disadvantageous to heat the piston for such deformation because this can have adverse effects on the strength of the piston. Further, stressing the pin and the piston, can cause weaknesses which could lead to failure in operation.

According to the invention, there is provided a method of shaping gudgeon pin bores formed in respective gudgeon pin bosses of a piston for an internal combustion engine or a compressor, the method being of the kind comprising inserting a pin into the gudgeon pin bores and then applying a load to the pin in a direction to deform radially outwardly respective areas of bore-defining walls of the gudgeon pin bosses which extend to the inner ends of the bores and which lie on the crown side of a plane which includes the common axis of the gudgeon pin bores and which is normal to the piston axis, characterised in that the pin is a shaped pin having boss-engaging portions of a circular cross-section which decreases in diameter from the inner ends of the portions to the respective ends of the pin, the shaped pin being inserted into said gudgeon pin bores and loaded before the piston is connected to a connecting rod by a gudgeon pin.

The following is a more detailed description of some embodiments of the invention, by way of example, reference being made to the accompanying drawings, in which:

Figure 1 is a cross-sectional view of a piston for an internal combustion engine or a compressor; part of an inner end of a gudgeon pin bore being formed in a gudgeon pin boss of the piston being shown on an enlarged scale in an insert;

Figures 2A, 2B and 2C are respective side elevations of a pin for use in shaping the gudgeon pin bores of the piston of Figure 1; each Figure showing alternative shapes of boss-engaging portions of the pin;

Figures 3A, 3B and 3C are longitudinal cross-sections of parts of the pin of Figure 2A showing respective alternative internal shapes of a bore of the pin of Figure 2A;

Figures 4A, 4B and 4C are cross-sectional views of the pin of Figures 2A, 2B or 2C showing three different possible cross-sectional shapes of a bore of the pin; and

Figure 5 is a diagram showing directions of application of a load to the pins of Figures 2A, 2B or 2C mounted on the gudgeon pin bores of the piston of Figure 1.

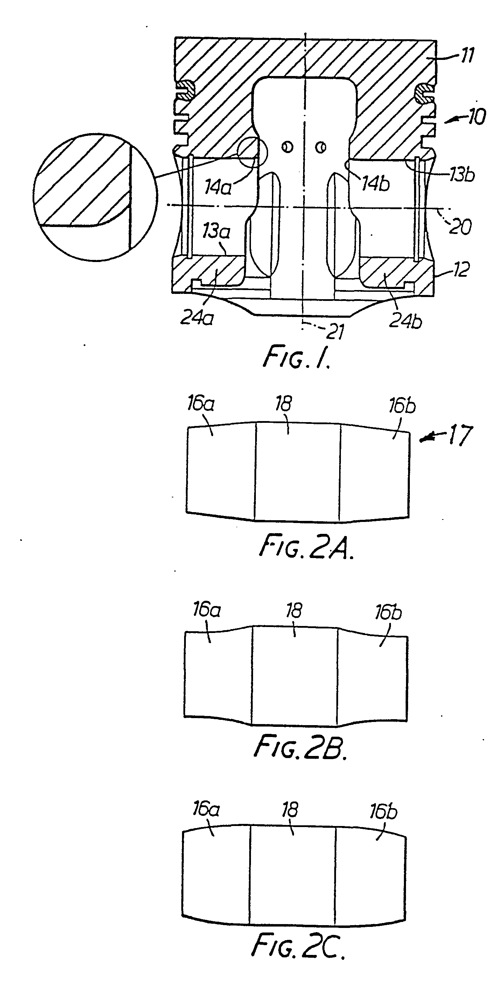

Referring first to Figure 1, the piston 10 comprises a crown 11 and a skirt 12. Two coaxial gudgeon pin bores 13a, 13b are formed in respective gudgeon pin bosses 24a, 24b, extend inwardly from the skirt 12 and terminate at respective inner ends 14a, 14b within the piston 10. In use, the piston 10 slides within a cylinder of an internal combustion engine or a compressor and is connected to a connecting rod (not shown) by a gudgeon pin (not shown) in the normal way.

During operation of the internal combustion engine or compressor, the connecting rod applies a load to the gudgeon pin bosses 24a, 24b through the gudgeon pin and this causes stresses in the gudgeon pin bosses 24a, 24b which can result in the appearance of cracks in the gudgeon pin bosses 24a, 24b. These cracks have been found to start most often at the inner ends 14a, 14b of the gudgeon pin bosses 24a, 24b in the bore-defining walls of the gudgeon pin bosses 24a, 24b which lie on the crown side of a plane which includes the common axis 20 of the gudgeon pin bores 13a, 13b and which is normal to the piston axis 21.

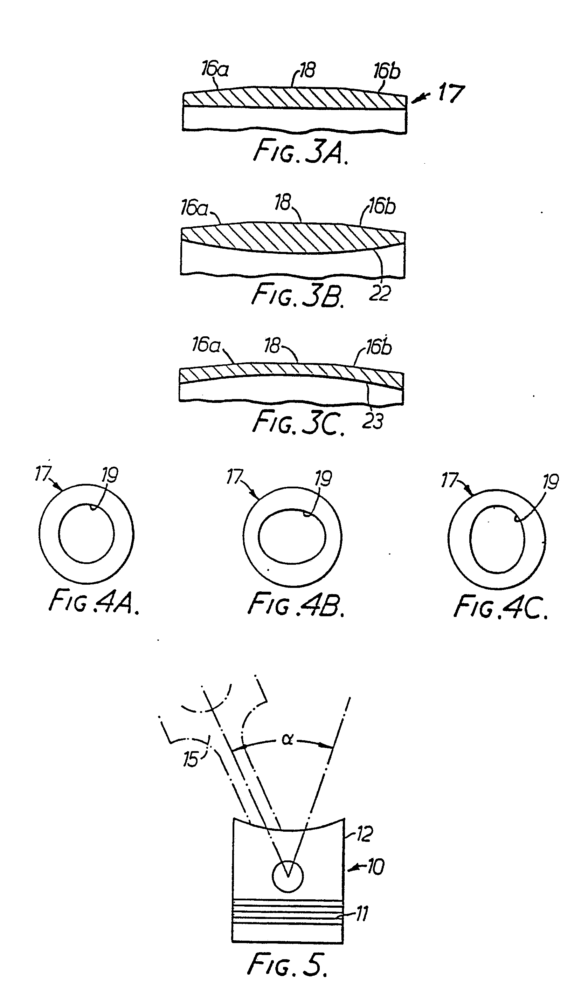

The method now to be described with reference to the drawings seeks to reduce the incidence of such cracks and comprises introducing respective portions 16a, 16b of a pin 17 (see Figures 2A, 2B or 2C) into the gudgeon pin bores 13a, 13b. A load is then applied by a rod 15 (Figure 5) to a part 18 of the pin 17 intermediate the bores to deform radially outwardly areas of the bore-defining walls of the gudgeon pin bosses 24a, 24b which extend to the inner ends 14a, 14b of the bores and which lie on the crown side of a plane which includes the common axis 20 of the bores and which is normal to the piston axis 21.

The direction at which the load is applied to the pin 17 is preferably chosen to coincide with the direction of the connecting rod when applying the most critical load to the gudgeon pin in the gudgeon pin bores 13a, 13b when the piston 10 is assembled and operating in a compression stroke of an internal combustion engine. This direction of application of the load will depend on the type and location of cracks which are observed in failed, unmodified, pistons. In general, the line of the load will lie within the arc shown as having angle a in Figure 5.

The boss-engaging portions 16a, 16b of the pin 17 have a circular external cross-section which decreases in diameter from the inner ends of the portions to the respective ends of the pin 17. This ensures that the amount by which the surfaces of the bores 13a, 13b are deformed is a maximum at the inner ends of the bores 13a, 13b and decreases in an axial direction along the bores from said inner ends. The boss-engaging portions 16a, 16b may be frusto-conical (Figure 2A) or may be concave (Figure 2D) or convex (Figure 2C) to produce frusto-conical, convex and concave shaped deformations respectively.

The extent of the deformation in an axial direction from the inner ends 14a, 14b of the bores can be controlled by controlling the axial flexibility of the pin 17. For this purpose, the pin 17 has an axial bore 19 whose axial shape determines the axial flexibility of the pin 17. The shape of the bore may, as shown in Figure 3A, be a constant crosssectional area along the length of the bore. Alternatively, the cross-sectional area of the bore 19 may vary from a minimum at the centre of the pin 17 to a maximum at the ends (line 22, Figure 3B), or may vary from a maximum at the centre of the pin 17 to a minimum at the ends of the pin (line 23, Figure 3C). The former shape will, in comparison with a constant cross-sectional area bore, distribute the load more towards the end of the pin 17 and thus increase the axial length of the deformation. The latter shape will distribute the load more towards the centre of the pin 17 and thus reduce the axial length of the deformation in comparison with a bore 19 of constant crosssectional area.

The extent of the deformation in an arcuate direction can be controlled by controlling the flexibility of the pin in a plane normal to the pin axis 20. This control may be achieved by altering the cross-sectional shape of the bore 19. As shown in Figure 4A, the cross-sectional shape may be circular. Alternatively, as shown in Figures 40 and 4C this shape may be eliptical with either the minor axis (Figure 40) or the major axis (Figure 4C) lying along the line of action of the load. The former alignment increases the arcuate extent of the deformation in comparison with a circular cross-section bore 19 while the latter alignment decreases the arcuate extent of the deformation in comparison with the circular cross-section bore 19.

The method described above with reference to the drawings has the advantage of being able to be carried out cheaply and simply. Deformation is limited to those portions of bore-defining walls of the gudgeon pin bosses 24a, 24b which are most highly stressed and thus there is no unnecessary deformation. The method can be readily adapted to all shapes and sizes of piston having two gudgeon pin bores.

## Claims

1. A method of shaping gudgeon pin bores (13a, 13b) formed in respective gudgeon pin bosses (24a, 24b) of a piston for an internal combustion engine or a compressor, the method being of the kind comprising inserting a pin (17) into the gudgeon pin bores (13a, 13b) and then applying a load to the pin in a direction to deform radially outwardly respective areas of bore-defining walls of the gudgeon pin bosses which extend to the inner ends (14a, 14b) of the bores and which lie on the crown side of a plane which includes the common axis (20) of the gudgeon pin bores and which is normal to the piston axis (21), characterised in that the pin is a shaped pin having boss-engaging portions (16a, 16b) of a circular cross-section which decreases in diameter from the inner ends of the portions (16a, 16b) to the respective ends of the pin (17), the shaped pin (17) being inserted into said gudgeon pin bores (13a, 13b) and loaded before the piston is connected to a connecting rod by a gudgeon pin.

2. A method according to claim 1, characterised in that the direction is chosen to coincide with the direction of a connecting rod (15) when applying a critical load to a gudgeon pin in the gudgeon pin bores when a piston (10) is, in use, assembled and operating in a firing stroke in an internal combustion engine or compressor.

3. A method according to claim 1 or claim 2, characterised by further comprising controlling the extent of the deformation in an axial direction from the inner ends of the gudgeon pin bores by use of a pin having a predetermined flexibility in an axial direction.

4. A method according to claim 3, characterised in that said flexibility is determined by the use of a pin having an axially extending bore (22) whose axial shape (Figs. 3A, 3B, 3C) determines the axial flexibility of the pin.

5. A method according to any one of claims 1 to 4, characterised by the further step of controlling the extent of the deformation in a plane normal to the axis of the bores by use of pins of differing flexibilities in a plane normal to the pin axis.

6. A method according to claim 5, characterised in that said flexibility is determined by the use of a pin having an axially extending bore (22) whose cross-sectional shape (Figs. 4A, 40, 4C) determines the flexibility of the pin in a plane normal to the pin axis.

**Patentansprüche**

1. Verfahren zum Formen von Kolbenbolzenbohrungen (13a, 13b), die in entsprechenden Kolbenbolzennaben (24a, 24b) eines Kolbens für eine Brennkraftmaschine oder einen Kompressor gebildet sind, wobei das Verfahren von der Art ist, bei dem ein Zapfen (17) in die Kolbenbolzenbohrungen (13a, 13b) eingesetzt und sodann eine Last auf den Zapfen in einer Richtung aufgebracht wird, um entsprechende Bereiche der die Bohrungen definierenden Wände der Kolbenbolzennaben, die sich zu den inneren Enden (14a, 14b) der Bohrungen erstrecken und an der Kronenseite einer die gemeinsame Achse (20) der Kolbenbolzenbohrungen enthaltenden und senkrecht zur Kolbenachse (21) liegenden, Ebene liegen, radial auswärts zu verformen, dadurch gekennzeichnet, daß der Zapfen ein geformter Zapfen ist, der Nabeneingriffsabschnitte (16a, 16b) mit einem kreisförmigen Querschnitt hat, der im Durchmesser von den inneren Enden der Abschnitte (16a, 16b) zu den entsprechenden Enden des Zapfens (17) abnimmt, wobei der geformte Zapfen (17) in die Kolbenbolzenbohrungen (13a, 13b) eingesetzt und der Last ausgesetzt wird, bevor der Kolben durch einen Kolbenbolzen mit einer Pleuelstange verbunden wird.

2. Verfahren nach Anspruch 1 dadurch gekennzeichnet, daß die Richtung so gewählt wird, daß sie mit der Richtung einer Pleuelstange (15) zusammenfällt, wenn eine kritische Last auf einen Kolbenbolzen in den Kolbenbolzenbohrungen aufgebracht wird, wenn ein Kolben (10) bei Verwendung zusammengebaut ist und in einem Verbrennungshub einer Brennkraftmaschine oder eines Kompressors arbeitet.

3. Verfahren nach Anspruch 1 oder 2, dadurch gekennzeichnet, daß es weiters die Steuerung des Ausmaßes der Verformung in einer axialen Richtung von den inneren Enden der Kolbenbolzenbohrungen durch Verwendung eines Zapfens umfaßt, der eine vorherbestimmte Biegsamkeit in einer axialen Richtung hat.

4. Verfahren nach Anspruch 3, dadurch gekennzeichnet, daß die Biegsamkeit durch Verwendung eines Zapfens mit einer sich axial erstreckenden Bohrung (22) bestimmt wird, deren axiale Form (Fig. 3A, 3B, 3C) die axiale Biegsamkeit des Zapfens bestimmt.

5. Verfahren nach einem der Ansprüche 1 bis 4, gekennzeichnet durch den weiteren Schritt, daß das Ausmaß der Verformung in einer zur Achse der Bohrung senkrechten Ebene durch Verwendung von Zapfen mit unterschiedlichen Biegsamkeiten in einer zur Zapfenachse senkrechten Ebene gesteuert wird.

6. Verfahren nach Anspruch 5, dadurch gekennzeichnet, daß die Biegsamkeit durch Verwendung eines Zapfens mit einer sich axial erstreckenden Bohrung (22) bestimmt wird, deren Querschnittsform (Fig. 4A, 4B, 4C) die Biegsamkeit des Zapfens in einer zur Zapfenachse senkrechten Ebene bestimmt.

**Revendications**

1. Procédé pour façonner les trous d'axe de piston (13a, 13b) ménagés dans les bossages respectifs d'axe de piston (24a, 24b) d'un piston pour un moteur à combustion interne ou un compresseur, procédé qui est du type comprenant l'introduction d'un axe (17) dans les trous (13a, 13b) puis l'application d'une charge à l'axe suivant une direction pour déformer radialement vers l'extérieur des zones respectives de paroi de trou des bossages, zones qui s'étendent jusqu'aux extrémités intérieures (14a, 14b) des trous et sont situées du côté du fond de piston d'un plan contenant l'axe géométrique commun (20) des trous des bossages et qui est perpendiculaire à l'axe géométrique (21) du piston, caractérisé en ce que l'axe est un axe façonné possédant des parties (16a, 16b) destinées à être engagées dans les bossages, parties qui ont une section droite circulaire diminuant en diamètre à partir des extrémités intérieures desdites parties (16a, 16b) jusqu'aux extrémités respectives de l'axe (17), l'axe façonné (17) étant introduit dans les trous (13a, 13b) des bossages et étant chargé avant que le piston ne soit relié à une bielle par un axe de piston.

2. Procédé selon la revendication 1, caractérisé en ce que la direction d'application de la charge coïncide avec l'orientation d'une bielle (15) à l'application d'une charge critique à l'axe dans les trous des bossages pendant la course motrice du

7

piston (10) au cours de son fonctionnement dans un moteur à combustion interne ou un compresseur.

3. Procédé selon la revendication 1 ou 2, caractérisé en ce qu'il comprend, en outre, le contrôle de l'étendue de la déformation dans le sens axial, à partir des extrémités intérieures des trous des bossages, par l'utilisation d'un axe ayant une flexibilité prédéterminée dans le sens axial.

4. Procédé selon la revendication 3, caractérisé en ce que la flexibilité est déterminée par l'utilisation d'un axe possédant une perçage axial (22) dont la forme dans le sens axial (figures 3A, 3B, 3C) détermine la flexibilité axiale de l'axe.

5. Procédé selon l'une quelconque des revendications 1 à 4, caractérisé en ce qu'il comprend l'opération supplémentaire qui consiste à contrôler l'étendue de la déformation dans un plan normal à l'axe des trous par l'utilisation d'axes de différentes flexibilités dans un plan normal à l'axe géométrique de l'axe.

6. Procédé selon la revendication 5, caractérisé en ce que la flexibilité est déterminée par l'utilisation d'un axe ayant un perçage axial (22) dont la forme en section droite (figures 4A, 4B, 4C) détermine la flexibilité de l'axe dans un plan normal à l'axe géométrique de l'axe.

FIG. 1.

FIG. 2A.

FIG. 2B.

FIG. 2C.

1

16a      18      16b

← 17

FIG. 3A.

16a      18      16b

FIG. 3B.   22

16a      18      16b

FIG. 3C.   23

17      19

FIG. 4A.

17      19

FIG. 4B.

17      19

FIG. 4C.

α

15

12

← 10

11

FIG. 5.